# EUROPEAN PATENT APPLICATION

(11) **EP 0 596 446 A1**
(43) Date of publication of application: **11.05.1994**
(21) Application number: 93117715.8
(22) Date of filing: 02.11.1993
(51) Int. Cl.: B60H 1/34

(54) **Device for delivering air from the conditioning unit of motor vehicles to multiple pre-orientated ducts**

(30) Priority: 05.11.1992 IT TO920903
(71) Applicant: FOGGINI PROGETTI S.r.l., I-10092 Beinasco Torino (IT)
(72) Inventor: Davico, Claudio, I-10094 Giaveno (Torino) (IT)
(74) Representative: Modiano, Guido, Dr.-Ing.

(57) **Abstract**

The device comprises a manifold (11) which branches into a plurality of adjacent and/or superimposed delivery ducts (13,14), each duct being pre-orientated along a respective delivery direction and being provided with correspondingly orientated fixed end diffuser means (22,23, 24), with means (29) for interrupting or reducing air flow in the manifold, and with means (25,28), subjected to a centralized control element (33), for selecting at least one duct and consequently orientating the flow of air delivered in the direction of the selected duct or ducts.

## Description

The present invention relates to a device for delivering air from the conditioning unit of motor vehicles.

As is known, modern motor vehicles are provided with air-conditioning systems which can deliver hot and/or cold air to heat and respectively cool or condition the interior of the vehicle.

Currently, the conditioning air is delivered by orientatable vents arranged on the dashboard and/or on the console or in other locations of the interior.

These delivery vents are generally constituted by a diffuser of limited size provided with means for reducing and interrupting the flow of air and with an orientation grille constituted by a double series of vanes which direct said flow along two mutually perpendicular planes, typically horizontally and vertically.

This known system for distributing and delivering the flow of conditioned air has, as is known, numerous drawbacks.

A first drawback is that orientation of the flow requires a specific action which is different from the flow reduction action, and that the vanes of the orientation grille must be maneuvered on each individual vent, and this is not always possible if the vents are located far apart and in any case distracts one's attention from driving the motor vehicle.

Another drawback is that air diffusion is not fully satisfactory, both because the diffuser of the vent has a relatively limited size and because the air is delivered in a space shaped like a truncated cone having its smaller cross-section equal to the cross-section of the diffuser and having a rather limited taper. Consequently, the flow is always intensely directional and the selected orientation prevents the simultaneous presence of a diffused flow in the spaces adjacent to said truncated-cone diffusion region. On the other hand, it is equally impossible to concentrate the flow in limited spaces inside said truncated-cone diffusion region to obtain a rapid heating or cooling effect, for example of the face or of other parts of the passengers' body.

Another drawback of said known delivery vents is the geometry of the diffuser and of the orientation grille, typically constituted by an orientatable frame for supporting the vanes. This diffuser, having a generally rectangular cross-section, and the frame, which is generally flat, are in fact not suitable for insertion in dashboards having markedly curved surfaces, which car manufacturers tend to use increasingly due to aesthetic reasons and for passive safety.

The aim of the present invention is to eliminate these serious drawbacks, and within the scope of this general aim it has the important object of providing a device for delivering conditioning air in which any flow orientation maneuver performed directly on the orientation grille of the individual vents is fully eliminated and in which flow orientation is produced by means of a centralized control element, typically constituted by a knob the angular movements of which select corresponding orientations for the diffused and/or concentrated delivery of the air flow.

Another important object of the present invention is to provide a device for delivering conditioning air which has fixed diffusion grilles suitable to assume any profile and to have surfaces which are curved in any way so as to fit, without discontinuities, in dashboards having a curved shape which is concave and/or convex to any degree.

A further object of the present invention is to provide a delivery device the flow diffusion surface of which is very large, significantly larger than that of said known delivery vents, and is thus capable of diffusing the air flow in very large spaces which practically affect the entire interior of the motor vehicle.

Another important object of the invention is to provide a delivery device which can deliver a highly directional flow orientated, for example, on the driver's face and simultaneously, if required, a diffuse flow in the remaining regions of the interior.

With this aim, these and other objects in view, there is provided, according to the present invention, a device for delivering air from the conditioning unit of motor vehicles, characterized in that it comprises a manifold which branches into a plurality of adjacent and/or superimposed delivery ducts, each duct being pre-orientated along a respective delivery direction and being provided with correspondingly orientated fixed end diffuser means, with means for interrupting or reducing the flow in said manifold and with means, subject to a centralized control element, for selecting at least one duct and consequently orientating the flow of air delivered in the direction of the selected duct or ducts.

Further characteristics and advantages of the device according to the present invention will become apparent from the following detailed description thereof and with reference to the accompanying drawings, given only by way of non-limitative example and wherein:

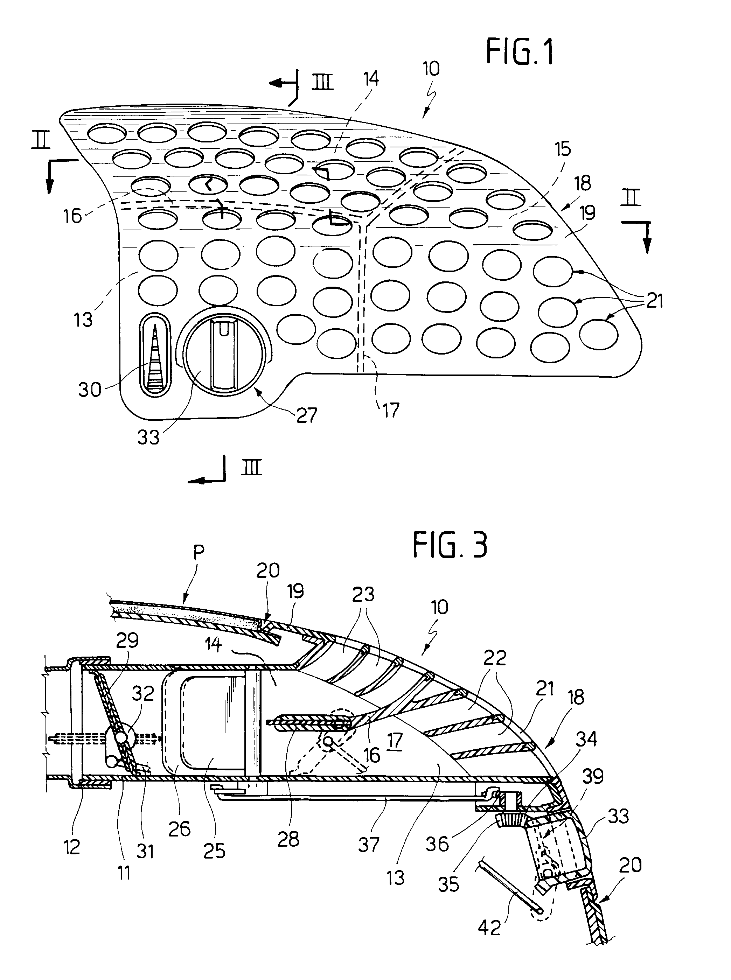

figure 1 is a front elevation view of the delivery device according to the invention;

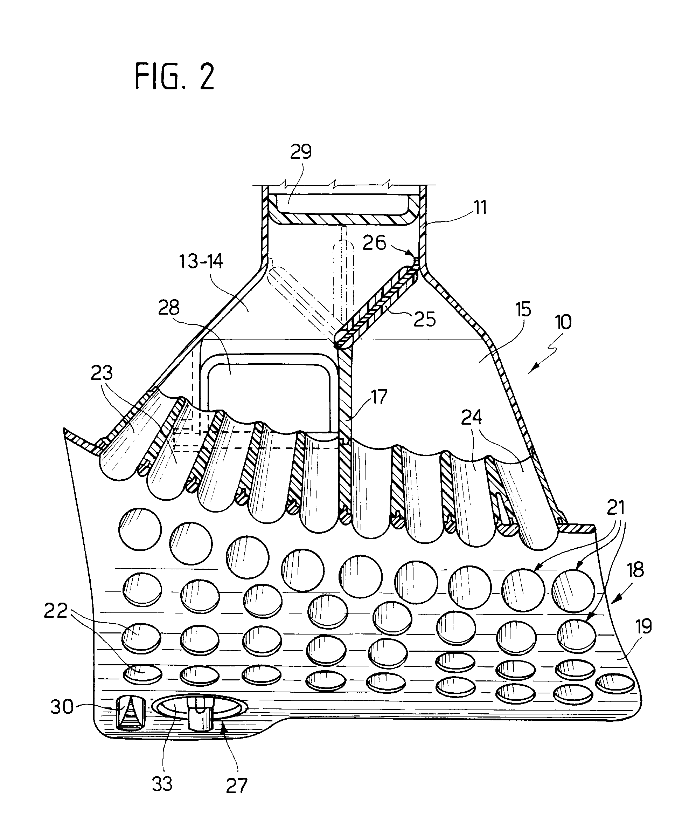

figure 2 is a sectional view, taken along the partial planes II-II of figure 1;
figure 3 is a sectional view, taken along the partial planes III-III of figure 1;
figure 4 is a perspective detail view of the kinematic systems of the centralized control element;
figure 5 is a sectional view, similar to figure 2, illustrating a further embodiment of the invention.

In the drawings, the reference numeral 10 generally designates the delivery device according to the present invention, suitable to be inserted, for example, in the dashboard P of a motor vehicle.

The device 10 substantially comprises a manifold 11, suitable to receive the end of the air supply hose 12, and a plurality of delivery ducts 13-14-15 which branch from said manifold and are arranged adjacent, mutually side by side and/or stacked. In the illustrated example, the device 10 is provided with three delivery ducts, two of which form a pair of superimposed ducts 13-14 mutually separated by a wall 16, said ducts being laterally adjacent to the third duct 15, from which they are separated by means of a corresponding wall 17.

According to the present invention, each delivery duct is pre-orientated in a respective delivery direction and leads into a fixed diffuser 18 constituted by a rigid plate 19 which has the contour and surface shape of a preset and in any case large portion of the dashboard P so as to fit in said dashboard to constitute an integral part thereof.

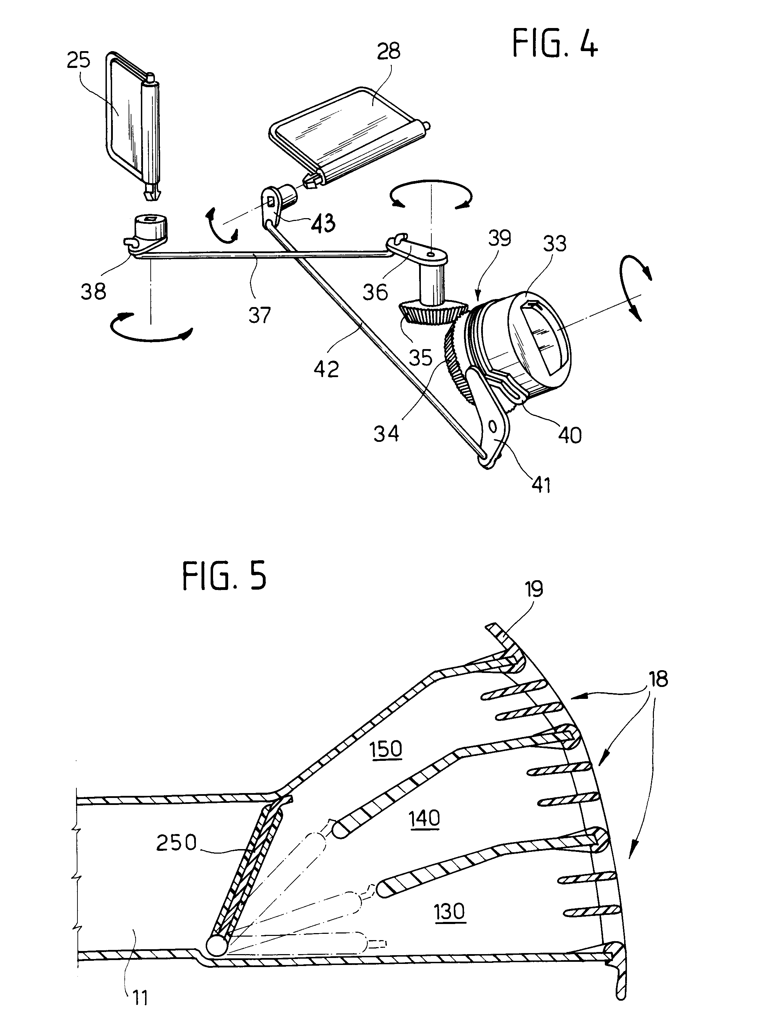

For this purpose, a recessed seat 20 (figure 3) is provided in the dashboard P and is suitable to receive the diffuser 18, arranged flush to said dashboard and integrating it without substantial discontinuities.

A grille is formed in the rigid plate 19 and is constituted by holes 21 having, for example, a circular or diamond-shaped profile or other profiles chosen according to the desired aesthetic appearance. The diffuser 18 is divided into diffuser portions, each of which corresponds to each delivery duct 13 to 15. Diffusion channels 22 to 24 are formed in the diffuser portions; their cross-section is similar to the profile of the holes 21 of the grille, and their axis is curved or straight in accordance with the shape of the axis of the respective delivery duct 13 to 15; the diffusion channels can be cylindrical or conical and, in the second case, converging or divergent.

In the illustrated example, the duct 13 is orientated towards one side of the interior of the motor vehicle, the duct 14 is directed laterally upward and the duct 15 is directed in a straight direction, frontally with respect to said interior. Correspondingly, the diffusion channels 22-23 have a curved axial shape and the channel 24 has a straight axial shape which matches the shape of the respective duct 15.

According to the invention, as clearly shown in the figures, a first oscillating selection valve 25 is hinged to the wall 17, is provided with an elastomeric gasket 26 and is suitable to selectively interrupt the pair of superimposed ducts 13-14 or the duct 15; the valve 25 can be switched into one interruption position or into the other, or can be orientated in an intermediate position in which it does not interrupt the ducts, by means of an actuation element 27.

Similarly, a second oscillating selection valve 28 is pivoted to the wall 16 that separates the pair of superimposed ducts 13-14; said valve, too, is equipped with an elastomeric gasket suitable to selectively interrupt one or the other of the superimposed ducts 13-14 or to be arranged in an intermediate position in which it does not interrupt the ducts; the second valve 28 is also controlled by the control element 27. A third valve 29 of the butterfly type is arranged in the manifold 11 and has the purpose of interrupting or reducing the flow of air delivered as a whole; said third valve is controlled by a dedicated control element, constituted by a knob 30 having a horizontal axis and cooperating with a connecting rod 31 articulated to a crank 32 rigidly coupled to said valve.

As clearly shown in the figures, the control element 27 comprises a front knob 33 which can assume a set of three angular positions respectively corresponding to the selection of the front duct 15 alone, to the opening of all three ducts, or to the selection of the duct 14 alone, which concentrates the flow of air substantially in the direction of the driver's head (spot).

For this purpose, the control element 27 is structured as shown in the detail view of figure 4, where the cylindrical body of the knob 33 is provided with a bevel gear 34 which meshes with a corresponding bevel pinion 35 rigidly coupled to an oscillating arm 36 which, by means of a connecting rod 37, actuates a corresponding movement arm 38 rigidly coupled to the valve 25. A circular groove 39 is also formed on the cylindrical body of the knob 33, and its end portion 40 is shaped like an axial cam. The pawl of a rocker 41 engages in the groove 39; said rocker, by means of a connecting rod 42, is connected to a corresponding movement arm 43 rigidly coupled to the valve 28. The action of the cam-like portion 40 is applied to the valve 28 when the arm 38 of the valve 25 is in the stroke limit position, and therefore this action is substantially irrelevant in terms of the movement of the valve 25, which remains in the position for interrupting the duct 15 when the valve 28 is moved, by the terminal rotation of the knob 33, into the position for interrupting the duct 13, shown in dashed lines in figure 3.

The embodiment of figure 5 differs from what has been described above in that it has an oscillating selection valve 250 pivoted to the manifold 11. With this arrangement, the valve connects, or interrupts in succession a series of ducts 130-140-150 which may be arranged side by side or superimposed and parallel or orientated in any other way.

It is easily understood that in this case the valve 250 acts not only as an orientation element but also as an element for limiting or interrupting the delivered flow of air.

Naturally, without altering the concept of the present invention, the details of execution and the embodiments may be altered extensively with respect to what has been described and illustrated by way of non-limitative example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for delivering air from the conditioning unit of motor vehicles, characterized in that it comprises a manifold (11) which branches into a plurality of adjacent and/or superimposed delivery ducts (13,14,15), each duct being pre-orientated along a respective delivery direction and being provided with correspondingly orientated fixed end diffuser means (22,23,24), with means (29) for interrupting or reducing air flow in said manifold, and with means (25,28) subjected to a centralized control element (27), for selecting at least one duct and consequently orientating the flow of air delivered in the direction of the selected duct or ducts.

2. Device according to claim 1, characterized in that said delivery ducts (13,14,15) lead into a fixed diffuser (18) constituted by a fixed plate (19) which is provided with a grille and has the contour and surface shape of a preset but in any case large portion of the dashboard (P) of the vehicle, to constitute an integral part thereof; said grille being constituted by holes (21) having a generic profile and being formed in said fixed plate (19).

3. Device according to claims 1 and 2, characterized in that said fixed diffuser (18) is divided into diffuser portions, each one of which corresponds to each delivery duct (13,15), and in that the diffuser portions have diffuser means (22,24) directed according to the orientation of the associated duct (13,15).

4. Device according to claims 1, 2 and 3, characterized in that said diffuser means are constituted by cylindrical or conical diffusion channels (23,24) the cross-section whereof is similar to the profile of the holes (21) of the diffuser grille (18) and the axis whereof is curved or straight in accordance with the shape of the axis of the respective delivery duct.

5. Device according to claim 1, characterized in that said delivery ducts (13-14;15) are mutually adjacent and are separated by corresponding walls (16,17) delimiting a pair of superimposed ducts (13,14) arranged to the side of a third duct (15).

6. Device according to claims 1 and 5, characterized in that said means for selecting at least one delivery duct include a first (25) and a second (28) selection valves pivoted to the respective walls (16,17) that separate said delivery ducts from one another.

7. Device according to claim 6, characterized in that said first (25) and second (28) selection valves are oscillatable and can assume symmetrical angular positions for the selective interruption of respective adjacent ducts and a central non-interruption position in which said valve is co-planar, or substantially co-planar, to the wall (16,17) to which it is pivoted.

8. Device according to claim 1, characterized in that said means for selecting at least one delivery duct comprise at least one oscillating valve (250) pivoted to the manifold (11) of the device; said valve being suitable to open, or interrupt in succession the ducts (130,140,150) which branch from the manifold and to simultaneously act as an element for interrupting or reducing the cross-section of said manifold.

9. Device according to claims 1 and 6, characterized in that said centralized control element (27) comprises a front knob (33) arranged on said plate (19) of the diffuser (18) and kinematically connected to said first (25) and second (28) selection valves, and in that the rotation of said knob actuates the first and the second valves in succession.

10. Device according to claims 1 and 9, characterized in that said knob comprises a cylindrical body (33) provided with a bevel gear (34) which meshes with a bevel pinion (35) rigidly coupled to an oscillating arm (36) connected, by means of a connecting rod (37), to an arm (38) for moving the first valve (25); in that the cylindrical body (33) of the knob is furthermore provided with a circular groove (35), with an end portion (40) shaped so as to form an axial cam, in which the pawl (41) of a rocker engages, said rocker being connected, by means of a connecting rod (42), to an arm (43) for moving the second valve (28); and in that the action for the actuation of said cam-like portion (40) is applied to the arm (43) for moving the second valve (28) when the arm (37) for moving the first valve (25) is in its stroke limit position.
